# EUROPÄISCHE PATENTSCHRIFT

(11) **EP 1 923 257 B1**
(45) Veröffentlichungstag und Bekanntmachung des Hinweises auf die Patenterteilung: **23.10.2013**
(21) Anmeldenummer: 07021157.8
(22) Anmeldetag: 30.10.2007
(51) Int. Cl.: B60N 2/015, B62D 25/20

(54) **Sitzbefestigung für einen Kraftfahrzeugsitz**
Seat attachment for a motor vehicle seat
Fixation pour un siège de véhicule automobile

(30) Priorität: 07.11.2006 DE 102006052355
(43) Veröffentlichungstag der Anmeldung: 21.05.2008
(73) Patentinhaber: GM Global Technology Operations LLC, Detroit, MI 48265-3000 (US)
(72) Erfinder: Gruseck, Thomas, 55237 Flonheim (DE); Klimek, Stanislaw, 60433 Frankfurt/Main (DE)
(74) Vertreter: Daniel, Ulrich W.P.

(56) Entgegenhaltungen:
- EP-A- 0 937 630
- US-A- 4 747 636
- US-B1- 6 431 632

## Beschreibung

Die Erfindung betrifft eine Sitzbefestigung für einen Kraftfahrzeugsitz gemäß dem Oberbegriff des Anspruchs 1. Die Erfindung betrifft ferner ein Kraftfahrzeug, beispielsweise einen Pkw, mit dieser Sitzbefestigung.

Es ist allgemein bekannt, Kraftfahrzeugsitze mittels einer Sitzbefestigung am Karosserieboden zu befestigen. Eine Sitzbefestigung umfasst hierbei in der Regel Sitzquerträger, die nach unten mit dem Karosserieboden und seitlich mit Tunnel und Schweller verbunden sein können. Eine derartige gattungsbildende Sitzbefestigung ist aus der US 6 431 632 B1 bekannt.

DE 10224454 A1 zeigt eine Sitzbefestigung mit einem Sitzquerträger, der als geschlossenes Profil ausgebildet und im Extrusionsverfahren hergestellt ist.

Querträger zur Versteifung der Karosserie eines Fahrzeuges sind aus der gattungsgemäßen US 4 747 636 A sowie der EP 0 937 630 A2 bekannt.

Der Erfindung liegt die Aufgabe zugrunde eine Sitzbefestigung für Kraftfahrzeugsitze bereitzustellen, die einem Karosserieboden eine höhere Quersteifigkeit verleiht.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft eine Sitzbefestigung für einen Kraftfahrzeugsitz. Eine erste Ausführungsform der Sitzbefestigung umfasst einen aus zwei Komponenten bestehenden Sitzquerträger. Eine erste Komponente ist an einem Kfz-Karosserieboden befestigbar. Eine zweite Komponente ist oberhalb der ersten Komponente angeordnet. Die beiden Komponenten bilden zwei übereinander angeordnete Kammern, die von einem Deckel der ersten Komponente voneinander getrennt sind.

Der Sitzquerträger hat eine aussteifende Wirkung in Fahrzeugquerrichtung, was sich darin äußert, dass im Fall eines Seitenaufpralls der Karosserieboden nicht unterhalb des Sitzquerträgers nach oben ausbricht und diesen entsprechend deformiert. Beide Kammern haben einen Deckel, der jeweils eben ausgebildet und ggf. horizontal ausgerichtet sein kann. Beide Deckel steifen den Sitzquerträger horizontal aus. Die zwei Kammern werden durch den Deckel der ersten, unteren Komponente voneinander getrennt. Das heißt, dass sich die obere Kammer über die gesamte Breite des länglichen Sitzquerträgers bzw. der unteren Kammer erstreckt und insofern nicht nur eine lokale Einprägung, Nut oder dergleichen ist.

Dadurch, dass im Vergleich zum Stand der Technik eine zusätzliche Kammer bzw. ein zusätzlicher Deckel derselben vorliegt, wird die Quersteifigkeit bis etwa um den Faktor 2 gesteigert. Gleichzeitig wird die Biegesteifigkeit bei einem Frontalzusammenstoß erhöht, da sich der Längsträger des Karosseriebodens am Sitzquerträger abstützt.

Die erste Komponente des Sitzquerträgers ist nach unten mit dem Karosserieträger und seitlich mit dem Schweller und dem Tunnel verbindbar. Die darüber befindliche zweite Komponente ist mit der ersten Komponente verbunden und beispielsweise verschweißt.

Selbstverständlich ist es auch möglich, drei oder mehr Kammern vorzusehen, wodurch die Quersteifigkeit der zugeordneten Fahrzeugkarosserie nochmals gesteigert wird.

In einer zweiten Ausführungsform sind zwei Kammern vorgesehen und ist das Verhältnis von Höhe der ersten Kammer zu Höhe der zweiten Kammer etwa 1:3. Die Höhe wird hierbei ab dem Karosserieboden gemessen, der vereinfacht als eben angesehen wird. Bei diesem Höhenverhältnis zeigte sich in Simulationen mit zwei Kammern eine Verbesserung der Quersteifigkeit um den Faktor 2.

In einer weiteren Ausführungsform ist die zweite Komponente ausschließlich mit der ersten Komponente verbunden. Ausschließlich die erste Komponente sorgt in diesem Fall für die Anbindung des Sitzquerträgers an die Karosserie. Dies erlaubt es, für die zweite Komponente eine besonders einfache Geometrie vorzusehen, beispielsweise eine U-Form, die mit ihren nach unten gerichteten Schenkeln an der ersten Komponente befestigt ist. Der die beiden Schenkel verbindende Teil des U kann eben ausgebildet und im Übrigen horizontal ausgerichtet sein. Durch die einfache Geometrie fällt es leicht, die zweite Komponente als Gleichteil sowohl bei verschiedenen Fahrzeugmodellen innerhalb derselben Fahrzeugarchitektur als auch architekturübergreifend einzusetzen. Dies erhöht die Zahl der Gleichteile in der Fahrzeugproduktion und senkt die Herstellungskosten.

Ferner wird eine Ausführungsform vorgeschlagen, bei der die Streckfestigkeit der zweiten Komponente mindestens zweimal so groß ist wie die Streckfestigkeit der ersten Komponente. Da der Tunnel und der Schweller oftmals hochfeste Materialien sind, erlaubt diese Wahl zunächst ein Verschweißen der unteren ersten Komponente mit dem Tunnel und dem Schweller. Weiterhin kann dann für die obere zweite Komponente ein hochfestes Material gewählt werden, das nicht direkt mit einem hochfesten Schweller-oder Tunnelmaterial verschweißbar ist, sehr wohl aber mit der ersten Komponente.

Beispielsweise kann für die erste Komponente eine Streckfestigkeit von 300 MPa bis 400 MPa und für die zweite Komponente eine Streckfestigkeit von mehr als 800 MPa gewählt werden. Insgesamt ergibt sich wegen des Materialmix für den Sitzquerträger eine weitere Queraussteifung, sodass insgesamt die Quersteifigkeit gegenüber dem Stand der Technik mit einer Kammer und einem tiefgezogenen Querträger etwa um den Faktor 4 gesteigert werden kann. Der sich dadurch ergebende verbesserte Insassenschutz für den Fall eines Seitenaufpralls ergibt sich hierbei ohne Gewichtszunahme und ohne zusätzliche Kosten für den Hersteller.

In einer weiteren Ausführungsform ist die Streckfestigkeit der ersten Komponente kleiner als 400 MPa und die Streckfestigkeit der zweiten Komponente größer als 800 MPa.

Die untere erste Komponente kann je nach Bodengeometrie als Tiefzieh- oder Faltteil ausgelegt sein. Die zweite Komponente kann als Faltteil, Rollformteil oder als einfaches Tiefziehteil gestaltet sein.

In einer weiteren Ausführungsform verfügt der Deckel der zweiten Komponente über mindestens ein Klemmloch zur Befestigung einer Sitzschiene und über eine dem Klemmloch zugeordnete Einprägung. In das Klemmloch ist ein mit einer Sitzschiene verbundener Montagehaken einbringbar. Die Einprägung ist derart angeordnet, dass sich der Montagehaken auf der Einprägung abstützen kann. Je nach Tiefe der Einprägung können unterschiedliche Materialstärken des Deckels der zweiten Komponente ausgeglichen werden. Auf diese Weise ist ein universeller Montagehaken als Gleichteil innerhalb ein und derselben Fahrzeugarchitektur als auch architekturübergreifend einsetzbar. Der Einsatz dieses Gleichteils erlaubt eine günstige Massenproduktion des Montagehakens und reduziert insgesamt die Anzahl der für die Fertigung verschiedener Fahrzeugmodelle erforderlichen Teile.

Ein weiterer Aspekt der Erfindung bezieht sich auf ein Kraftfahrzeug, insbesondere einen Pkw, das bzw. der eine Sitzbefestigung nach einer der oben beschriebenen Ausführungsformen umfasst.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine perspektivische Seitenansicht einer Ausführungsform eines Sitzquerträgers,
- Fig. 2: eine Draufsicht auf den Sitzquerträger der Figur 1,
- Fig. 3: einen Schnitt A-A durch den Sitzquerträger der Figur 2,
- Fig. 4: einen Schnitt B-B durch den Sitzquerträger der Figur 3,
- Fig. 5: eine Explosionsdarstellung eines Ausschnitts X der Figur 4,
- Fig. 6: eine Ansicht gemäß Figur 4, welche die Befestigung einer Sitzschiene zeigt.

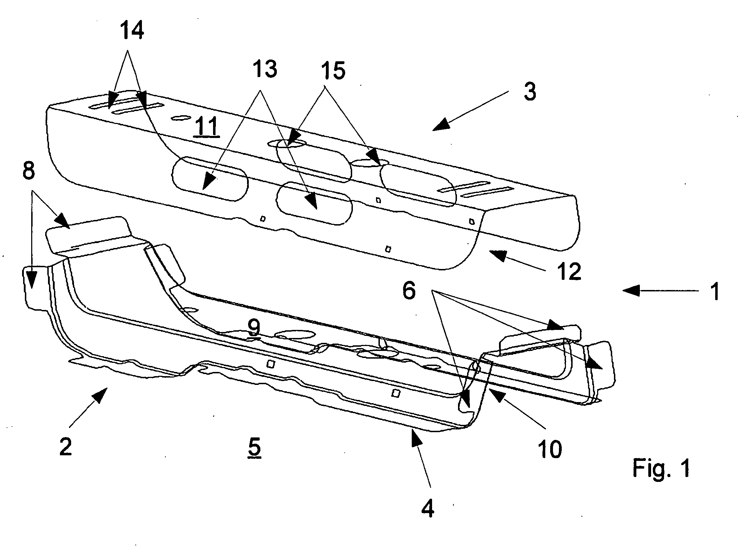

Bei den Figuren, die allgemein mit gleichen Bezugszeichen gleiche Gegenstände bezeichnen, zeigt Figur 1 eine Ausführungsform eines Sitzquerträgers 1 aus zwei Komponenten 2 und 3.

Die erste Komponente 2 des Sitzquerträgers 1 ist mit Flanschen 4 am Karosserieboden 5, mit Flanschen 6 am Schweller 7 und mit weiteren Flanschen 8 am Tunnel (nicht gezeigt) befestigbar. Sie verfügt dabei in ihrem zentralen Bereich über einen ebenen und auch horizontal ausgestalteten Deckel 9, der sich bezogen auf die Längsrichtung zu den Rändern hin nach oben wölbt. Die erste Komponente 2 ist damit in etwa U-förmig, wobei sich die Schenkel des U mit den zugeordneten Flanschen 6,8 an Tunnel und Schweller 7 anschmiegen. Zwischen dem Deckel 9 und dem Karosserieboden 5 ist eine erste Kammer 10, auf die später noch näher eingegangen wird.

Oberhalb der ersten Komponente 2 befindet sich eine zweite Komponente 3, die bei der Montage vertikal nach unten abgesenkt und ausschließlich mit der unteren bzw. ersten Komponente 2 verschweißt wird. Diese Art der Befestigung erlaubt eine einfache Geometrie der oberen Komponente 3, die vorliegend eine einfache U-Form mit nach unten gerichteten Schenkeln ist. Die zweite Komponente 3 hat damit keine abragenden Befestigungsflansche und dergleichen, wie sie die erste Komponente 2 hat. Durch die einfache Geometrie lässt sich die zweite Komponente 3 als Gleichteil sowohl für verschiedene Fahrzeugmodelle innerhalb einer Fahrzeugarchitektur, als auch für mehrere Fahrzeugarchitekturen nutzen. Die zweite Komponente 3 lässt sich daher wegen der einfachen Geometrie mit einfachen Mitteln herstellen. Als Gleichteil lässt sie sich zudem in hoher Stückzahl kostengünstig herstellen.

Die zweite Komponente 3 hat einen ebenen Deckel 11, der vorliegend horizontal ausgerichtet ist. Der Deckel 9 der ersten Komponente 2 und der Deckel 11 der zweiten Komponente 3 sind in vertikaler Richtung voneinander beanstandet und schließen eine zweite Kammer 12 ein.

Weiterhin besitzen beide Schenkel der zweiten Komponente 3 durchgehende Löcher 13. Diese werden dazu benutzt, um Lüftungsschläuche und elektrische Leitungen am Karosserieboden 5 entlang zu verlegen. Klemmlöcher 14 dienen der Montage eines Kraftfahrzeugsitzes und optionale Schweißlöcher 15 dienen der Verschweißung im Rahmen der Montage.

Die erste Komponente 2 ist ein Tiefzieh- oder Faltteil mit einer Streckfestigkeit von 400 MPa, wohingegen die zweite Komponente 3 ein hochfester Stahl mit einer Streckfestigkeit von 1200 MPa ist.

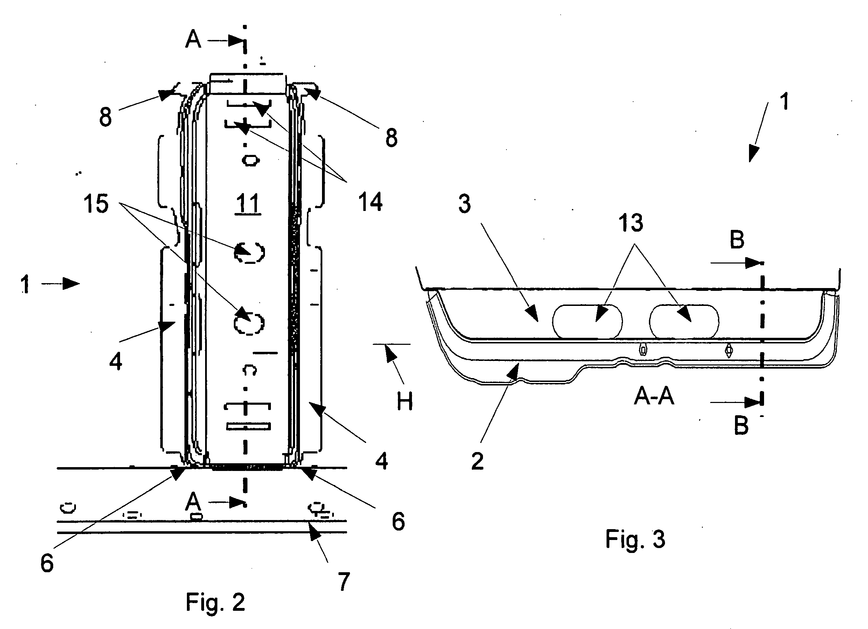

Figur 2 zeigt den Sitzquerträger 1 in einer Draufsicht. Man erkennt die abragenden Flansche 4 zur Befestigung der ersten Komponente 2 am Karosserieboden 5, Flansche 8 zu ihrer Befestigung am (nicht gezeigten) Tunnel sowie am Schweller 7 anliegende Flansche 6 der ersten Komponente 2.

Figur 3 zeigt einen Schnitt A-A durch den Sitzquerträger 1 der Figur 2 mit Blick in Richtung der auf die strichpunktierte Linie der Figur 2 gerichteten Pfeile, also mit einem Blick senkrecht zur Schnittebene. Oberhalb der Höhe H sieht man einen Schenkel der zweiten Komponente 3 und unterhalb die erste Komponente 2. Löcher 13 sind nur in der zweiten Komponente 3, nicht aber in der ersten Komponente 2 enthalten. Damit wird die ohnehin nur aus einem Material mit geringerer Streckfestigkeit gebildete erste Komponente 2 nicht in ihrer Struktur geschwächt. Da die zweite Komponente 3 ohnehin aus einem hochfesten Stahl ist, fällt deren Strukturschwächung durch die Löcher 13 nicht ins Gewicht.

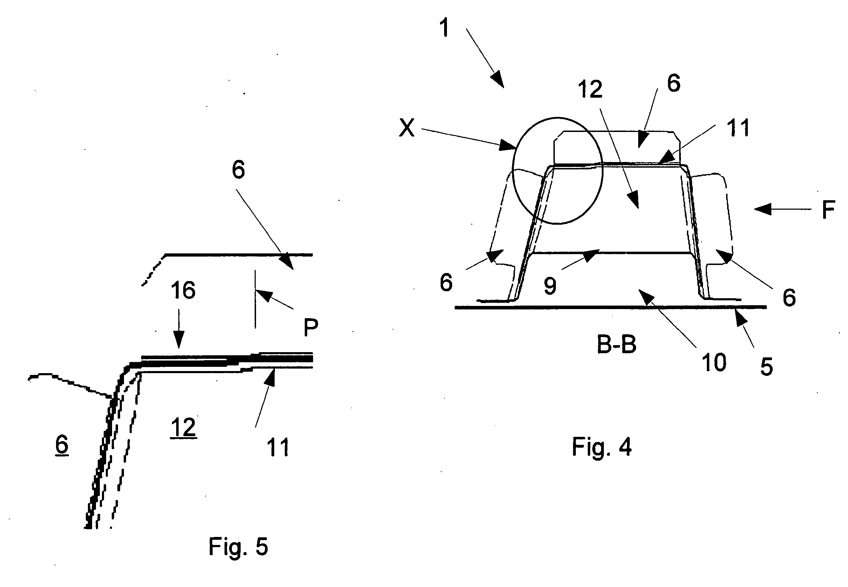

Figur 4 zeigt einen Schnitt B-B durch den Sitzquerträger 1 der Figur 3 mit Blick in Richtung der auf die strichpunktierte Linie der Figur 3 gerichteten Pfeile, also mit einem Blick senkrecht zur Schnittebene. In dieser Darstellung erkennt man die beiden Kammern 10 und 12. Diese erstrecken sich über die gesamte Breite des länglichen Sitzquerträgers 1. Die zweite Kammer 12 ist damit keine lokale Einprägung, eine Nut oder dergleichen. Die ab dem Karosserieboden 5 gemessene Höhe der beiden Deckel 9 und 11 haben ein Verhältnis von etwa 1:3 zueinander.

Kommt es zu einem Seitenaufprall des mit diesem Sitzquerträger 1 ausgestatteten Kraftfahrzeugs, beispielsweise eines Pkw, so wirkt eine Kraft F in horizontaler Richtung. Aussteifend wirken dann sowohl der Deckel 9 als auch der Deckel 11. Da insgesamt zwei die Quersteifigkeit maßgeblich bestimmende Deckel vorliegen, wird die Quersteifigkeit des Sitzquerträgers 1 gegenüber dem Fall nur eines Deckels um den Faktor 2 erhöht. Es tritt hinzu, dass die erste Komponente 2 keine durchgehenden Löcher 13 besitzt. Dadurch wird deren Struktur nicht durch Löcher geschwächt bzw. müssen umgekehrt keine lokale Strukturverstärkungen an den Orten durchgehender Löcher vorgenommen werden. Dadurch vereinfacht sich die Geometrie der ersten Komponente 2. Da weiterhin die zweite Komponente 3 aus einem hochfesten Material besteht, kann deren Wandstärke gegenüber einer konventionellen Bauweise abgesenkt werden, sodass insgesamt das Gewicht des Sitzquerträgers 1 durch diese Bauweise nicht erhöht wird. Die Wahl des hochfesten Materials erhöht jedoch die Quersteifigkeit etwa um den Faktor 2. Insgesamt ergibt sich damit eine in Fahrzeugquerrichtung erhöhte Steifigkeit um den Faktor 4.

Figur 5 zeigt in einer Explosionsdarstellung den in der Figur 4 dargestellten Bereich X. Man erkennt, dass der Deckel 11, etwa ab der Position P nach links, abgesenkt ist und insofern eine Einprägung 16 aufweist. Diese Einprägung 16 befindet sich in Verlängerung der länglichen Klemmlöcher 13 im Kantenbereich der zweiten Komponente 3. Die Einprägung 16 dient insofern der Befestigung einer Sitzschiene 17, als sich auf der Einprägung 16 ein Montagehaken 18 abstützen kann. Die Form der Einprägung 16 orientiert sich daher an der Form des Montagehakens 18 und kann länglich sein, sodass die Einprägung 16 eine Art Nut sein kann.

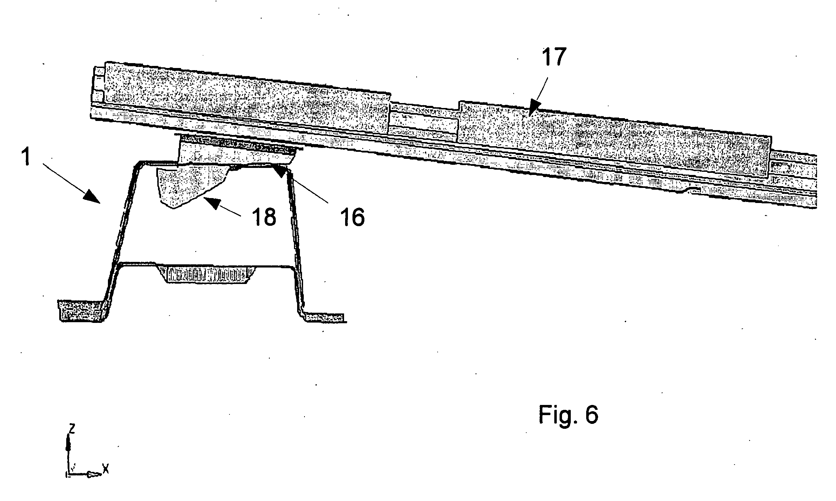

Figur 6 zeigt die Befestigung einer Sitzschiene 17 mit einem Montagehaken 18, bei der der Montagehaken 17 in ein Klemmloch 13 eingeführt ist und sich außerhalb des Sitzquerträgers 1 auf der Einprägung 16 abstützt. Der Montagehaken 17 ist an der Sitzschiene 18 befestigt. Durch die Einprägung 16 ist ein Höhenausgleich für den Montagehaken 17 möglich, da sich Höhenunterschiede durch unterschiedliche Materialstärken des Deckels 11 ergeben. Auf diese Weise lässt sich ein Montagehaken 17 einsetzen, der universell für alle Sitzbefestigungen einsetzbar ist.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Sitzquerträger
- 02: erste Komponente
- 03: zweite Komponente
- 04: Flansch
- 05: Karosserieboden
- 06: Flansch
- 07: Schweller
- 08: Flansch
- 09: Deckel
- 10: erste Kammer
- 11: Deckel
- 12: zweite Kammer
- 13: Loch
- 14: Klemmloch
- 15: Schweißloch
- 16: Einprägung
- 17: Sitzschiene
- 18: Montagehaken

- H: Höhe

- X: Ausschnitt
- P: Position

## Patentansprüche

1. Sitzbefestigung für einen Kraftfahrzeugsitz, umfassend einen Sitzquerträger (1), wobei der Sitzquerträger (1) eine erste Komponente (2) sowie eine darüber angeordnete zweite Komponente (3) besitzt, und die beiden Komponenten (2, 3) zwei übereinander angeordnete Kammern (10, 12) bilden, die von einem Deckel (9) der ersten Komponente (2) voneinander getrennt sind, wobei die erste Komponente (2) nach unten mit Flanschen (4) an einem Kfz-Karosserieboden (5) und seitlich mit Flanschen (6) einerseits an einem Schweller (7) befestigbar ist, **dadurch gekennzeichnet, dass** die erste Komponente mit weiteren Flanschen (8) andererseits an einem Tunnel befestigbar ist, und, dass die zweite Komponente zwischen den Flanschen (6) für den Schweller (7) und den Flanschen (8) für den Tunnel (3) liegt.

2. Sitzbefestigung nach Anspruch 1, **dadurch gekennzeichnet, dass** das Verhältnis Höhe der ersten Kammer (10) zu Höhe der zweiten Kammer (12) etwa 1:3 ist.

3. Sitzbefestigung nach Anspruch 1, **dadurch gekennzeichnet, dass** die zweite Komponente (3) ausschließlich an der ersten Komponente (2) befestigt ist.

4. Sitzbefestigung nach einem der vorherigen Ansprüche, **dadurch gekennzeichnet, dass** die Streckfestigkeit der zweiten Komponente (3) mindestens zweimal so groß ist wie die Streckfestigkeit der ersten Komponente (2).

5. Sitzbefestigung nach einem der vorherigen Ansprüche, **dadurch gekennzeichnet, dass** die Streckfestigkeit der ersten Komponente (2) kleiner als 400 MPa und die Streckfestigkeit der zweiten Komponente (3) größer als 800 MPa ist.

6. Sitzbefestigung nach einem der vorherigen Ansprüche, **dadurch gekennzeichnet, dass** der Deckel (11) der zweiten Komponente (3) ein Klemmloch (14) zur Befestigung einer Sitzschiene (18) und eine dem Klemmloch (14) zugeordnete Einprägung (16) besitzt.

7. Kraftfahrzeug, insbesondere Pkw, mit einer Sitzbefestigung nach einem der vorherigen Ansprüche.

## Claims

1. A seat attachment for a motor vehicle seat, comprising a seat cross-member (1), wherein the seat cross-member (1) comprises a first component (2) and a second component (3) arranged above said first component (2), and the two components (2, 3) form two chambers (10, 12) arranged one above the other, which are separated from each other by a cover (9) of the first component (2), wherein the first component (2) can be fixed downwardly with flanges (4) to a car body floor (5) and laterally with flanges (6) to a body sill (7) on the one hand, **characterized in that** the first component can be fixed with flanges (8) on the other hand to a tunnel, and that the second component (3) lies between the flanges (6) for the body sill (7) and the flanges (8) for the tunnel.

2. A seat attachment according to claim 1, **characterized in that** the ratio of the height of the first chamber (10) to the height of the second chamber (12) is approximately 1:3.

3. A seat attachment according to claim 1, **characterized in that** the second component (3) is only fixed to the first component (2).

4. A seat attachment according to one of the preceding claims, **characterized in that** the yield strength of the second component (3) is at least twice as large as the yield strength of the first component (2).

5. A seat attachment according to one of the preceding claims, **characterized in that** the yield strength of the first component (2) is less than 400 MPa and the yield strength of the second component (3) is larger than 800 MPa.

6. A seat attachment according to one of the preceding claims, **characterized in that** the cover (11) of the second component (3) comprises a clamping hole (14) for fixing a seat rail (18) and an embossed portion (16) associated with the clamping hole (14).

7. A motor vehicle, especially a passenger car, comprising a seat attachment according to one of the preceding claims.

## Revendications

1. Fixation de siège pour un siège de véhicule, comprenant un support de siège transversal (1), dans laquelle le support de siège transversal (1) comporte un premier composant (2) ainsi qu'un deuxième composant (3) disposé par-dessus et les deux composants (2, 3) forment deux compartiments (10, 12) disposés l'un par dessus l'autre, qui sont séparés l'un de l'autre par un couvercle (9) du premier composant (2), le premier composant (2) pouvant être fixé vers le bas avec des brides (4) à un plancher de carrosserie de véhicule (5) et latéralement, d'une part, avec des brides (6) sur un seuil de porte (7), **caractérisée en ce que** le premier composant peut être fixé d'autre part avec d'autres brides (8) à un tunnel, et **en ce que** le deuxième composant (3) repose entre les brides (6) pour le seuil de porte (7) et les brides (8) pour le tunnel.

2. Fixation de siège selon la revendication 1, **caractérisée en ce que** le rapport entre la hauteur du premier compartiment (10) et la hauteur du deuxième compartiment (12) est d'environ 1 pour 3.

3. Fixation de siège selon la revendication 1, **caractérisée en ce que** le deuxième composant (3) est fixé exclusivement sur le premier composant (2).

4. Fixation de siège selon l'une des revendications précédentes, **caractérisée en ce que** la résistance à l'allongement du deuxième composant (3) est au moins deux fois plus grande que la résistance à l'allongement du premier composant (2).

5. Fixation de siège selon l'une des revendications précédentes, **caractérisée en ce que** la résistance à l'allongement du premier composant (2) est inférieure à 400 MPa et la résistance à l'allongement du deuxième composant (3) est supérieure à 800 MPa.

6. Fixation de siège selon l'une des revendications précédentes, **caractérisée en ce que** le couvercle (11) du deuxième composant (3) comporte un trou de serrage (14) pour la fixation d'un rail de siège (18) et un emboutissage (16) associé au trou de serrage (14).

7. Véhicule à moteur, en particulier voiture, avec une fixation de siège selon l'une des revendications précédentes.
